# EUROPEAN PATENT SPECIFICATION

(11) **EP 1 514 446 B1**
(45) Date of publication and mention of the grant of the patent: **26.03.2008**
(21) Application number: 03732797.0
(22) Date of filing: 13.06.2003
(51) Int. Cl.: H04Q 7/38, H04L 29/06

(54) **SELF-REGISTRATION METHOD AND AUTOMATIC ISSUE OF DIGITAL CERTIFICATES AND RELATED NETWORK ARCHITECTURE IMPLEMENTING SUCH METHOD**
VERFAHREN ZUR SELBST-REGISTRIERUNG UND AUTOMATISCHEN AUSGABE VON DIGITALEN ZERTIFIKATEN UND ENTSPRECHENDES NETZ
PROCEDE POUR L'AUTO-ENREGISTREMENT ET L'EMISSION AUTOMATISEE DE CERTIFICATS NUMERIQUES ET ARCHITECTURE DE RESEAU CORRESPONDANTE POUR SA MISE EN OEUVRE

(30) Priority: 14.06.2002 IT RM20020033
(43) Date of publication of application: 16.03.2005
(73) Proprietor: Telecom Italia S.p.A., 20123 Milano (IT)
(72) Inventor: VOCI, Vincenzo, c/o TELECOM ITALIA MOBILE S.P.A, I-00163 Roma (IT); DI NUNZIO,P.M.R., c/o TELECOM ITALIA MOBILE S.P.A., I-00163 Roma (IT); LEONE, MANUEL TELECOM ITALIA S.p.A., 10148 Torino (IT); CAPRELLA, ETTORE TELECOM ITALIA S.p.A., 10148 Torino (IT); DE LUTIIS, PAOLO TELECOM ITALIA S.p.A., 10148 Torino (IT)
(74) Representative: Giannesi, Pier Giovanni
(86) International application number: PCT/IB2003/002289
(87) International publication number: WO 2003/107710

(56) References cited:
- WO-A-00/02406
- WO-A-02/21464
- GB-A- 2 366 141

## Description

The present invention relates in a general way to the security of information and telematics systems. More particularly, it relates to a particular method of managing the PKI (Public Key Infrastructure), in other words the equipment for the spread, distribution, maintenance and control of digital certificates, which resolves an extremely difficult problem of this infrastructure: namely the distribution of digital certificates and the authentication of users' requests.

### Known art

The implementation of PKI-based systems requires the use of identifiers known as "digital certificates" which, in practice, act as electronic "passports" which relate the user's digital signature to his public key.

The corresponding infrastructure is based on the integration of hardware and software means and a set of management protocols in such a way as to provide the basic security levels required for electronic commerce, enabling users who do not know each other, or who are distributed over a wide area, to communicate and to establish a trust relationship. The most critical activity in a public key infrastructure consists in the reliable identification of the users who request the certification of the public keys, in order to enable them to use the PKI services (secure mail, desktop encryption, digital signature, SSL, VPN, etc.). In fact, the service company which is to distribute digital certificates according to present procedures must require the user to supply his own valid identifier to an authorized Registration Authority (RA), which in turn applies to a Certification Authority for the issue of the certificate associated with said specific user identifier. The whole trust model of any public key infrastructure model is based on this verification.

However, this verification, generally carried out by face-to-face strategies, is frequently slow and expensive in terms of management, to the extent that it often leads to a slow-down of the whole deployment of the PKI and an under-use of the corresponding services.

On the other hand, TIM S.p.A. has already filed Italian patent RM 200A000538 in the name of Marcelli and Sentinelli, which discloses a method based on authentication protocols normally used for GSM mobile telephone networks and re-used for access to dedicated telematic services on a fixed network, in which the reliable identification of the user or of a class of users is requested.

WO00/02406concerns authentication to be performed in a telecommunications network, especially in an IP network. To allow authentication of users of IP networks in a geographically large area, the IP network's terminal uses a subscriber identity module as used in a separate mobile communications system, whereby a response may be determined from the challenge given to the identity module as input. The IP network also includes a special security server, to which a message about a new user is transmitted when a subscriber attaches to the IP network. The subscriber's authentication information containing at least a challenge and a response is fetched from the said mobile communications system to the IP network, and authentication is carried out based on the authentication information obtained from the mobile communications system by transmitting the said challenge through the IP network to the terminal, by generating a response from the challenge in the terminal's identity module and by comparing the response with the response received from the mobile communications system.

One of the objects of the present invention is to resolve the problem of the distribution of digital certificates and the authentication of users' requests by using a SIM-based authentication system similar to that already patented by TIM for access to dedicated telematic services on a fixed network. Specifically, the method according to the present invention is intended to authenticate users' certification requests submitted via SIM, while automating and accelerating the distribution of the certificates, and at the same time enabling the cellular telephone network operator to keep full control of the process. Clearly, the service requires the use of advanced SIM cards which can also act as conventional smart cards and thus manage PKI functions and services.

A further object of the present invention is to provide a protocol for auto-registration and automated issue of digital certificates with the corresponding network architecture, using validation procedures, special-purpose software, technologies and components which are standard in the field of PKI, in order to make the protocol and its implementation reliable and inexpensive.

These and other objects which will be made clear in the present description are achieved by taking the SIM-based authentication system disclosed previously in the cited TIM patent and adapting it to the PKI sector in a suitable way which is described below.

In particular, the solution provides for the use of a method for the distribution of a digital certificate according to claim 1.

The present invention will now be described, purely by way of example and without intent to limit the scope of validity of the invention, with reference to the attached figures relating to a preferred embodiment, in which:
Fig. 1 is an outline diagram of the network architecture related to the system which manages the auto-enrolment service;
Fig. 2 is a block diagram showing a particular component of the network architecture shown in Fig. 1;
Fig. 3 is a general diagram of the sequential operational steps of the functions which implement the phases of enrolment of a certificate;
Fig. 4 is a specific diagram relating to the sequential operational phases for the verification of the user's credentials;
Fig. 5 is a diagram of the architecture of the components at the premises of one of the parties (the client) participating in the enrolment procedure;
Fig. 6 is a block diagram of the process of activation of a plug-in by a browser;
Fig. 7 is a further block diagram of the activation of a plug-in.

The following description provides details of all the technical aspects of the SIM-based enrolment service in a preferred embodiment of the present invention. The whole of the general architecture of the service will be described in the first place, followed by the client component and finally the server.

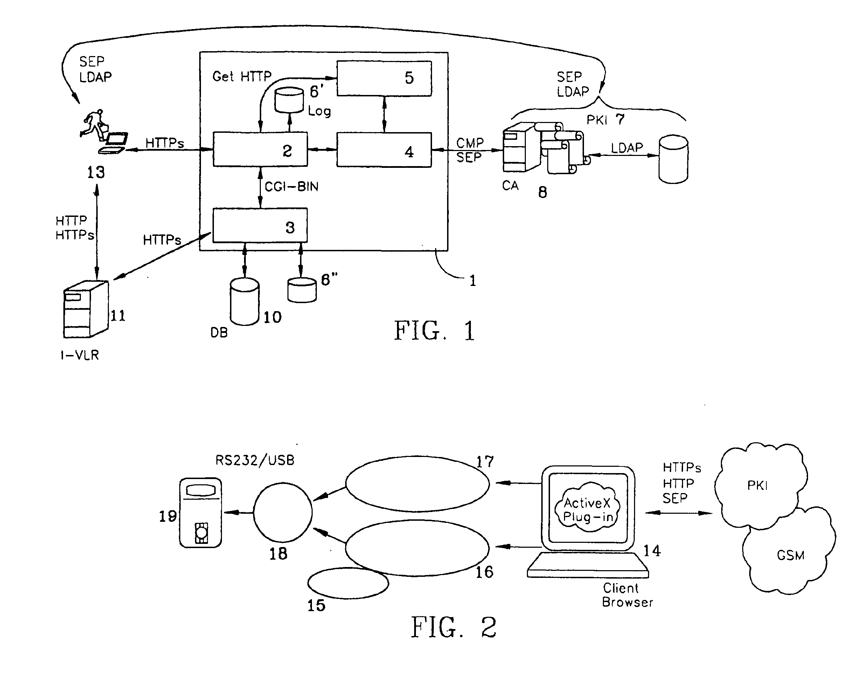

Fig. 1 shows said components and the relations between them. In particular, the server 1 for auto-registration and automated issue of digital certificates (hereafter abbreviated to "ARA server") consists of a computer (for example a Sun server with the Solaris 7 operating system) hosting the principal modules of the architecture.

A Web server 2 (of the iPlanet type) interacts with said ARA server which supports the procedures of distributing the digital certificates, with auto-registration and acquisition via the Web, by managing the HTML front end of the application dedicated to this service. It is also used by the ARA service for the phase of GSM authentication of the user who has an advanced SIM card.

Said procedures for distributing digital certificates with auto-registration and acquisition via the Web, required by the ARA service for interaction with the system applications described more fully below, constitute the tool that allows the issuing of digital certificates without the direct intervention of a physical operator, and provide two separate services:
- Administration Service 4
- Authentication Service 5.

Fig. 1 clearly shows that the Authentication Engine 3 interacts directly with the services 4 and 5 which execute the aforesaid procedures. This is the module of the ARA server which is responsible for the authentication of the users requesting a digital certificate.

The log file 6 is the repository which records all the requests for certificates. The requests are recorded directly by the WEB server. The stored data consist of:
- User name and registration number;
- Authentication data;
- Date, time and outcome of the request.

The PKI 7 service, of which ARA is a client, principally comprises the Certification Authority (CA) service 8 and the LDAP service.

This figure also shows the functions of:
- the client repository database 10, containing the list of users authorized to request a digital certificate,
- the I-VLR 11 server, acting as the gateway to the GSM system,
- the ARA client 13, consisting of specific software components (such as I-E and/or Netscape browsers, the aforesaid software of the Entelligence type, etc.) and hardware components such as Smart Card/SIM readers and the corresponding advanced SIM.

In order to correctly configure the firewalls and system access routers to ensure the correct operation of the ARA service; the following TCP protocols must be enabled:
- SEP, the default on port 709, required for the key management and initialization phases between the PKI system and the client software and/or the user,
- HTTP, the default on port 80, for dialogs between the GSM authentication library and the I-VLR server,
- HTTPs, the default on port 443, for dialogs between the user browser and the ARA server, and between the ARA server and I-VLR,
- PKIX-CMP, the default on port 829, for dialogs between the PKI environment and the procedures for distributing digital certificates with self-registration and acquisition via the Web;
- LDAP, the default on port 389, for dialogs between the LDAP directory server and the protocol which implements the secure transfer of identifiers and data at the user's end.

Fig. 2 shows the architecture of the client components of the ARA service.

The hardware and software components are as follows:
- a PC 14 with the corresponding operating system (for example Microsoft Windows 2000, NT 4.0 or 98), with an IE 5.X or Netscape 4.X browser and plug-in for activating the ARA service, responsible for controlling the phases of authentication and interaction with the procedures for the secure transfer of identifiers and data, in the collection of the authentication credentials and the transmission of the request for the certificate;
- a library (e.g. DLL) 15 for advanced SIM card interfacing/management;
- a library (e.g. DLL) 17 for GSM authentication;

- a client entity 16 for managing the certificates, comprising the dedicated procedures for the secure transfer of the identifiers and data;
- a PC/SC SIM/Smart Card reader 18 (for example a Microsoft certified reader);
- an advanced SIM card 19 having GSM and PKI functionality. In outline, the enrolment process takes place as described below.

A user, having the necessary software and hardware and an advanced SIM card 19, uses his browser to connect, via SSL on HTTP, to the certificate request web server 2, and receives in reply an HTML page which contains a suitable tag to trigger the execution of the plug-in for the ARA certification service 13. This service executes the authentication phase at I-VLR 11, using the GSM authentication library, and, if this phase is completed successfully, allows the browser to continue with the next phase of enrolment, which ends with the activation of the software 16 for the aforesaid dedicated protocol for the secure transfer of the identifiers and data present at the client.

Simplifying the matter, we can say that the standard enrolment mechanism for digital certificates using the known procedures for distributing digital certificates with self-registration and acquisition via the Web consists of requesting from a user a password (or shared secret) known to the system. In the case of the ARA service, a function of the key KDES calculated during the GSM authentication phase is used for this purpose. The verification of this secret, which is a one-time process and therefore not subject to reply attack at the server end, triggers the sending to the user of a special file, whose type (or mime-type) will cause the browser to automatically call the PKI client to conclude the enrolment phase.

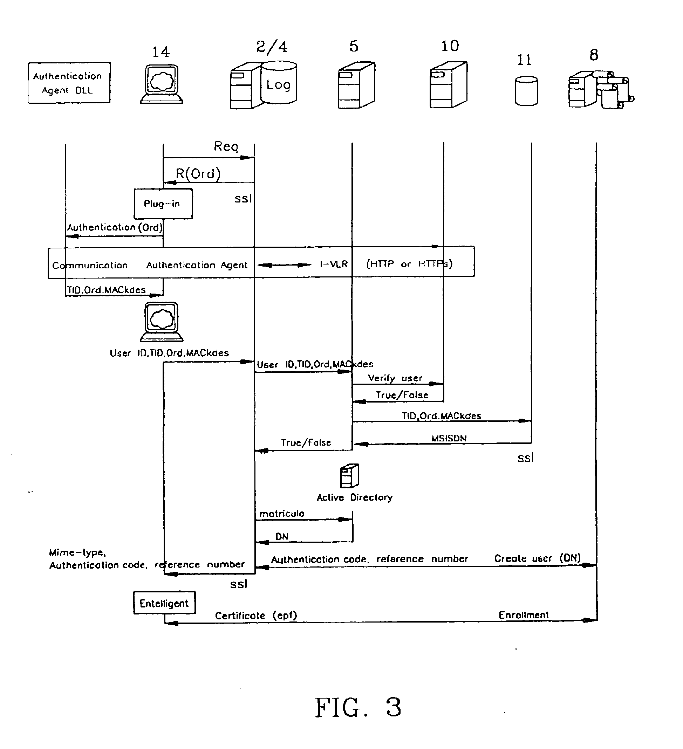

Fig. 3 shows the general sequence diagram of the whole ARA process. The phases are as follows (assuming that all the phases are completed successfully):
the user who wishes to make a certificate request contacts the appropriate service via a Web access (HTTPs protocol) using his browser;
the Web server (also with HTTPs) replies to the request by sending a special TAG to the browser for activation of the CARA plug-in;
the browser calls the CARA plug-in;
the CARA plug-in asks the user to enter his data (e.g. his name, surname and personal code number), and may also request the PIN if access to the user's SIM card is protected;
the CARA plug-in then activates the GSM authentication phase.
The GSM authentication is executed by the Ericsson DLL. The result of the above phase is returned to the CARA plug-in.
The CARA plug-in sends a request of the POST type to the ARA Web server, setting as parameters the user identifier consisting, for example, of the name, surname and personal code number, and as the password the sequence (e.g. MAC) calculated on the basis of the authentication parameters. The access to the ARA Web server is recorded in the log files of the WEB server.

The CARA plug-in sends the request to the AutoRA server;
the Administration Service asks the Authentication Service to verify the user's credentials;
the Authentication Service, by means of the Authentication Engine, verifies whether the user is authorized for the service, according to his credentials. The verification is carried out by accessing an appropriate Oracle table and using as the search key the personal code number (sAMAccountName) specified in the request;
(in case of a positive outcome) the Authentication Service, by means of the Authentication Engine, sends the verification of the (MAC) sequence to the I-VLR;
the Authentication Service compares the telephone number (MSISDN) received from the I-VLR, again via the Authentication Engine, with the corresponding values recorded in the user table of the database;
the Authentication Service returns True to the Administration Service if the outcomes of all the checks are positive;
the Administration Service requests the DN from the ActiveDirectory for the creation of the new user (via LDAP), using as the search key the personal code number (sAMAccountName) of the user who has requested the certificate, and authenticating itself by means of a simple authentication);
the Administration Service creates the new user (via a CMP or SEP) at the CA (Entrust/Authority component) and obtains his parameters (e.g. the authentication code and reference number) for the automatic issue of the certificate;
the Administration Service sends to the user the parameters assigned to him (in the preceding step), together with the mime-type specified by the protocol.

The browser calls the application for the secure transfer of the identifiers and data, sending it the user's authentication codes.

Said application for the secure transfer of the identifiers and data completes the phase of enrolment directly with the CA (via the SEP).

Clearly, the architecture is functionally adaptable to a Web-type certificate issue service, subject to the modification of the client software and the use at the server end of a software component operating with PKI authorization procedures for the issue of digital certificates in the Web environment.

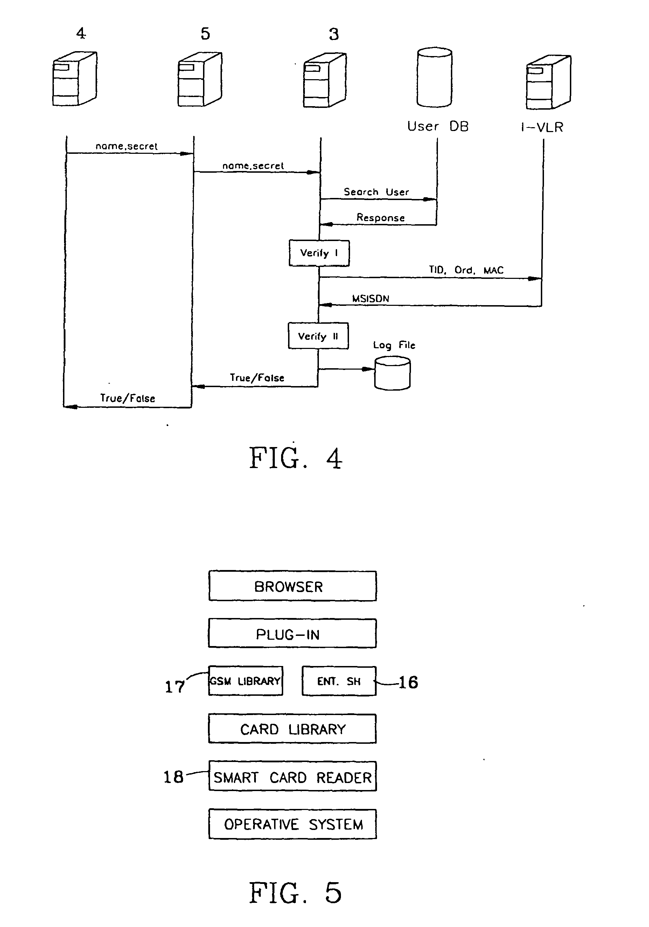

Bearing in mind that the Authorization functions 5 and Administration functions 4 are usually already included in the dedicated software for distributing digital certificates with auto-registration and acquisition via the Web, such as, e.g., the Entrust AutoRA program, Fig. 4 shows the specific sequence diagram for the phase of verification of the user credentials:
immediately after receiving the user credentials (name and secret) the Administration Service 4 of the AutoRA server forwards these data to the Authentication Service 5;
the Authentication Service 5 assigns the verification of the user authentication credentials from module 3, called the Engine, which is suitably customized according to the GSM authentication requirements. The Engine is activated via HTTP by calling a suitable CGI-BIN script installed in the WEB server which forms the front end of the service;
the Engine verifies that the data are in the correct format, and then requests from the database the identity (name and surname) and telephone number (MSISDN) corresponding to the user with the personal code number inserted. Having verified that the user exists and that the name and surname match, the Engine contacts the I-VLR via HTTPs to verify the secret, and
receives in reply the telephone number (MSISDN) of the SIM card by means of which the secret has been generated;
the Engine checks that the value of MSISDN returned by the I-VLR matches that previously read value in the user database;
the Engine then stores the logs of the request in a suitable Oracle table, the Engine returns the outcome of the checks to the Authentication Service module, the Authentication Service module of Entrust/AutoRA returns the outcome of the checks to the Administration Service. The latter continues the process as described previously in the sequence diagram (Fig. 3).

The client component is described below, with the analysis of a layered model of the characteristics of the ARA client used by the service users for the authenticated request of digital certificates.

The client component required for access to the service is characterized by the following functional sections included in the architecture shown in Fig. 5.
- Browser (Internet Explorer 5.X or Netscape Navigator 4.X)
- ARA certification service plug-in
- GSM authentication software library
- PKI application for the secure transfer of identifiers and data;
- Library of functions usually associated by the smart card manufacturer with the individual card;
- Smart card reader driver;
- Operating system (for example Microsoft Windows NT 4.0, 2000 and 98).

These components are described individually below.

### a) Browser

A browser is used for accessing the service, for reasons of flexibility, mobility and the user's familiarity with the environment.

### b) ARA certification service plug-in

The ARA certification service plug-in has the task of:
i - Launching the user authentication process and registration at I-VLR;
ii - Collecting and processing the user authentication credentials;
iii - Formatting the user certification request to the ARA server using a secure channel.

The architecture of the Internet Explorer-based ARA certification service component merits a more detailed description. The ActiveX MFC technology was chosen for the integration of the client, in other words the ARA certification service plug-in, into the browser, in order to maximize performance and provide an adequate level of protection. This is because this component was developed in C++ language in order to maximize performance and provide a higher level of security. Security is also enhanced by using approved tools such as the Microsoft AuthentiCode technology, designed to ensure both the authenticity and the integrity of the software. The software downloaded by the user is signed digitally, in order to provide the user with a guarantee of its origin, as well as to prevent unauthorized modifications.

For greater simplicity of use by the user, the plug-in incorporates the whole certificate chain required to verify the signature of the code, not only the certificate containing the public key used to sign the code.

Moreover, the reference to the ARA certification service plug-in is inserted in the Web page by means of a suitable tag. In this way the browser, having read the tag and verified the version of ActiveX, on the basis of the security policy specified by the user, will if necessary install it in a way which is transparent to the user.

Any subsequent versions or upgrades of the ARA certification service client can be distributed to the users without requiring the download and manual installation of the software. This is because the browser, once it has detected the presence of a new version of the software currently installed and registered on the machine, will automatically obtain and install the replacement version.

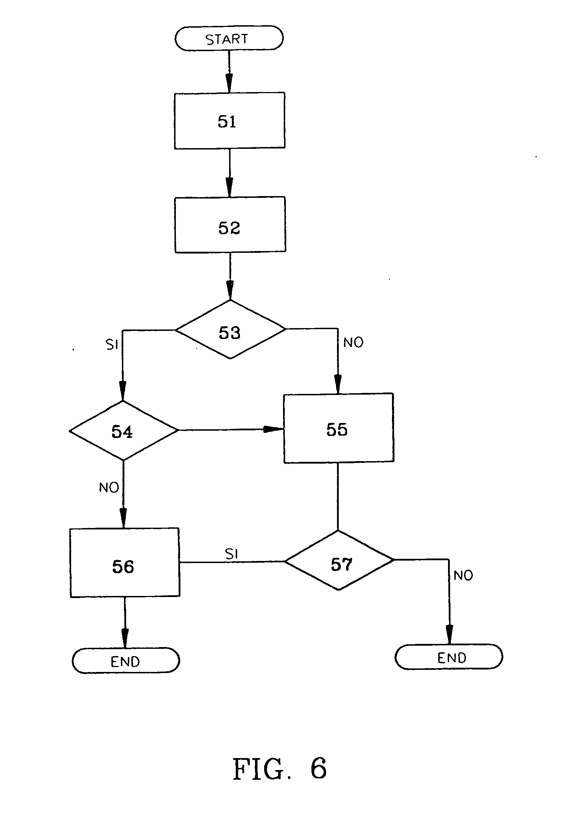

The flow chart showing the process of activation of the plug-in by the browser is shown schematically in Fig. 6.

After the download 51 of the HTML page via HTTPS, the data relating to the version of the ARA certification service plug-in are extracted at 52. If the test 53 shows that the plug-in is registered and is not a new release (as checked in 54) the process goes directly to the execution 56 of the ARA certification service plug-in.

On the other hand, if at 53 the plug-in is found to be unregistered, or registered but in the new release state, a new download of the plug-in and the extraction of the digital signature is requested at 55.

Only if the validity of the signature and the certificate are verified at 57 will the process go to the actual execution of the plug-in at 56.

The above diagram of Fig. 6 assumes that the security policies of the user's browser authorize the execution of signed plug-ins.

In any case, at least where accredited manufacturers (such as Microsoft) are chosen, the user will be provided with clear security guarantees concerning the origin and integrity of the downloaded code, because of the digital signature of the source code.

The ARA certification service plug-in also uses an external library for authentication of the user in the SIM-based system. This library consists of two separate files:
- A dynamic link library file (.DLL)
- An initialization file (.INI)

In terms of the procedure, once execution has started, the ARA certification service plug-in displays a dialog window to the user for the acquisition of the necessary parameters and data for forwarding the certification request.

The data requested may be:
- The user's name
- The user's surname
- The personal code number
- The PIN for the user's SIM card, if required.

One method of interactive operation with the user could be based on a graphic interface with an interaction of the following type:
*You are requesting a digital certificate. Please ensure that the SIM card is inserted into the reader of the personal computer. Then complete each field and click the OK button when you have finished.*

This is followed by the requests for data about the user, the form requesting, for example, the name, surname, membership list and the PIN of the user's SIM card.

Another means of establishing contact with the user is an interface which provides a help sequence such as:
*This is the help for the AutoRA service.*
*To register your certificates, please carry out the actions shown below:*
   *1. Ensure that the SIM card is correctly inserted in the SIM reader connected to your PC.*
   *2. Complete each section of the form with the corresponding information, for example:*
      - *name: enter your name (e.g. John);*
      - *surnames enter your surname (e.g. Smith);*
      - *identification number: enter your company personal code number;*
      - *SIM card PIN: enter the PIN of your SIM card if required.*
   *3. Finally, click the OK button to continue, or click CANCEL to cancel the certificate request.*

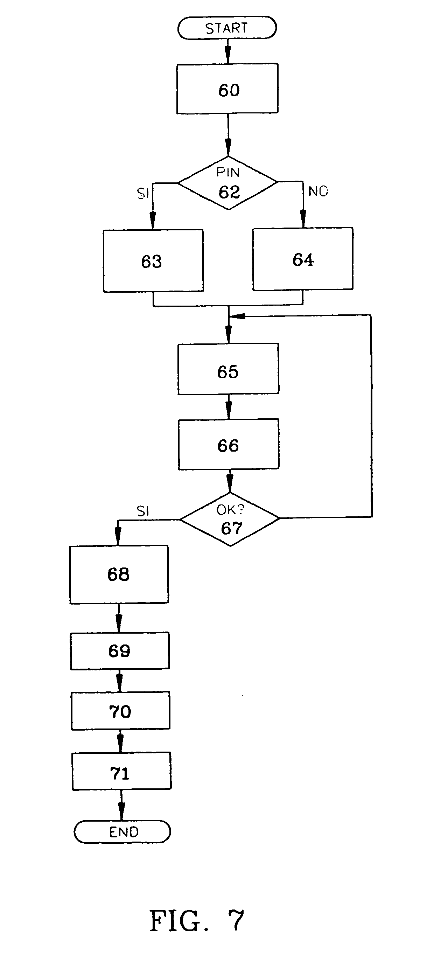

As shown in Fig. 7, once the initialization of the SIM card has taken place at 60, the necessity of providing the PIN is verified at 62, after which the corresponding test box is enabled at 63 or disabled at 64, according to whether the PIN is necessary or unnecessary respectively.

The procedure then enters a checking phase which, following the display 65 of a dialog and data collection window, checks the window 66, and, if the check test 67 is not passed, loops back to the display 65 of said dialog window; otherwise, if the check is passed, it goes to the execution of the SIM-based authentication process 68 and then to the management 69 of any errors. The procedure terminates with the processing and formatting of the data 70 and the final transmission 71 to the AutoRA server.

### List of abbreviations, acronyms and symbols

- 3DES:: Triple Data Encryption Standard
- ARA:: Auto Registration Authority
- CA:: Certification Authority of the certification service
- CN:: Common Name
- CMP:: Certificate Management Protocol (PKIX-CMP)
- DES:: Data Encryption Standard
- DN:: Distinguished Name
- EPF:: Entrust Profile File
- FTP:: File Transfer Protocol
- HTTP:: Hyper Text Transfer Protocol
- HTTPs:: HTTP Secure (HTTP/SSL)
- IMSI:: International Mobile Subscriber Identity
- IETF:: Internet Engineering Task Force
- IP:: Internet Protocol
- LDAP:: Lightweight Directory Access Control
- MAC:: Message Authentication Code
- MFC:: Microsoft Foundation Class
- PC/SC:: Personal Computer/Smart Card
- PIN:: Personal identification Number
- PKCS:: Public-Key Cryptography Standards
- PKI:: Public Key Infrastructure
- RA:: Registration Authority
- SARA:: Server Auto Registration Authority
- SEP:: Secure Exchange Protocol
- SIM:: Subscriber Identity Module
- SMTP:: Simple Mail Transfer Protocol
- SSL:: Secure Socket Layer
- TA:: Time stamping Authority
- TCP:: Transmission Control Protocol
- TLS:: Transport Layer Security

### ADVANTAGES AND INDUSTRIAL APPLICABILITY OF THE INVENTION

The principal benefit gained from the use of a service according to the present invention for the operator of a cellular telephone network consists in the ability to carry out the rapid and secure deployment of PKI in his intranet. It will also be highly advantageous to be able to offer:
- Corporate services: for example, a SIM + PKI product which can be rapidly integrated and installed in the field on users' premises. There are also possibilities of integration with previously installed PKI of the client (Entrust, Baltimore, etc.).
- Business services: for example, an automatic certificate distribution service to be offered to the Certification Authority (for example Saritel, BNL, Postecom, etc.). The service could be useful for such vendors of certificates, especially in that it enables a particularly high number of potential users to be reached in a simple and inexpensive way.
- Consumer services: for example, value-added Internet services to be offered to Clients of the cellular telephone network operator, such as payment, authenticated access to information services, VPN, secure mail, SSL, etc. These services could also be useful for the cellular telephone network operator because of the possible benefits in terms of image.

## Claims

1. Method for the distribution of a digital certificate to at least one user, the at least one user being provided with a respective terminal (14) associated with a respective subscriber identity module (19), the method comprising the following steps:
i) allowing access of the at least one user to a server (1) for auto-registration and automated issue of digital certificates, the access being associated with a request for a certificate for the user;
ii) triggering, at the user's terminal (14), execution of a client (13) adapted to activate an authentication procedure with an authentication server (11) acting as a gateway to a GSM system, the triggering being caused by said server (1) for auto-registration and automated issue of digital certificates, the client (13) causing extraction of identification data from said subscriber identity module (19) and a sending of said identification data to said authentication server (11);
iii) in case of successful authentication, obtaining at the user's terminal (14) authentication parameters of the authenticated user from said authentication server (11);
iv) creating a one-time password by a combination of the authentication parameters and sending said one-time password together with user identifiers from the user's terminal (14) to the server (1) for auto-registration and automated issue of digital certificates;
v) requesting, from the server (1) for auto-registration and automated issue of digital certificates to the authentication server (11), verification of the one-time password;
vi) verifying, by an appropriate database (10) associated with the server (1) for auto-registration and automated issue of digital certificates, and based on said user identifiers, a user's authorization to request the certificate;
vii) in case of positive result of said verifications, contacting a certification authority (8) for the creation of a new certificate for the authenticated user, receiving in reply parameters related to said certificate, and sending the certificate related parameters to said user, so as to allow said user to obtain the new certificate from said certification authority (8).

2. The method of claim 1, **characterized in that** said step v) is performed after the verifying of the user's authorization to request the certificate.

3. The method of claim 1, **characterized in that** said user identifiers comprise a name, a surname and a personal code number.

4. The method of claim 1, **characterized in that** said access to the server (1) for auto-registration and automated issue of digital certificates is managed by a web server (2) interacting with said server (1) for auto-registration and automated issue of digital certificates.

5. The method of claim 4, **characterized in that** said allowing access to the server (1) for auto-registration and automated issue of digital certificates comprises causing said web server (2) to present to the user an interactive interface.

6. The method of claim 5, **characterized in that** said interactive interface is adapted to receive said identification parameters of the user.

7. The method of Claim 4, **characterized in that** it further comprises recording said request for certificate in a log file (6') of said web server, after the sending of the user identifiers and of the one-time password.

## Patentansprüche

1. Verfahren zur Verteilung eines digitalen Zertifikats an zumindest einen Nutzer, wobei der zumindest eine Nutzer mit einem jeweiligen Endgerät (14) ausgestattet ist, das zu einem jeweiligen Teilnehmeridentitätsmodul (19) gehört, wobei das Verfahren die folgenden Schritte aufweist:
i) Erlauben eines Zugriffs des zumindest einen Nutzers auf einen Server (1) zur automatischen Registrierung und automatischen Erteilung von digitalen Zertifikaten, wobei der Zugriff zu einer Anforderung für ein Zertifikat für den Nutzer gehört;
ii) am Endgerät (14) des Nutzers Auslösen einer Ausführung eines Client (13), der geeignet ist, einen Authentifizierungsvorgang mit einem Authentifizierungsserver (11), der als ein Gateway zu einem GSM-System wirkt, zu aktivieren, wobei das Auslösen durch den Server (1) zur automatischen Registrierung und automatischen Erteilung von digitalen Zertifikaten verursacht wird, wobei der Client (13) eine Extraktion von Identifikationsdaten von dem Teilnehmeridentitätsmodul (19) und ein Senden der Identifikationsdaten zu dem Authentifizierungsserver (11) verursacht;
iii) im Fall einer erfolgreichen Authentifizierung, Erhalten von Authentifizierungsparametern des authentifizierten Nutzers von dem Authentifizierungsserver (11) am Endgerät (14) des Nutzers;
iv) Erzeugen eines einmaligen Passworts durch eine Kombination der Authentifizierungsparameter und Senden des einmaligen Passworts zusammen mit Nutzer-Identifikatoren vom Endgerät (14) des Nutzers zum Server (1) zur automatischen Registrierung und automatischen Erteilung digitaler Zertifikate;
v) Anfordern einer Verifizierung des einmaligen Passworts vom Server (1) zur automatischen Registrierung und automatischen Erteilung digitaler Zertifikate zum Authentifizierungsserver (11);
vi) Verifizieren einer Autorisierung eines Nutzers zur Anforderung des Zertifikats durch eine geeignete, zum Server (1) zur automatischen Registrierung und automatischen Erteilung digitaler Zertifikate gehörige Datenbank (10) und basierend auf den Nutzer-Identifikatoren;
vii) im Fall eines positiven Resultats der Verifikationen, Kontaktieren einer Zertifizierungsautorität (8) für die Erzeugung eines neuen Zertifikats für den authentifizierten Nutzer, als Antwort Empfangen von Parametern bezüglich des Zertifikats und Senden der Zertifikats-bezogenen Parameter an den Nutzer, um dem Nutzer zu erlauben, das neue Zertifikat von der Zertifizierungsautorität (8) zu erhalten.

2. Verfahren nach Anspruch 1, **dadurch gekennzeichnet, dass**
der Schritt v) nach der Verifizierung der Autorisierung des Nutzers zur Anforderung des Zertifikats durchgeführt wird.

3. Verfahren nach Anspruch 1, **dadurch gekennzeichnet, dass**
die Nutzer-Identifikatoren einen Namen, einen Nachnamen und eine persönliche Codenummer enthalten.

4. Verfahren nach Anspruch 1, **dadurch gekennzeichnet, dass**
der Zugriff auf den Server (1) zur automatischen Registrierung und automatischen Erteilung digitaler Zertifikate durch einen Webserver (2) verwaltet wird, der mit dem Server (1) zur automatischen Registrierung und automatischen Erteilung digitaler Zertifikate wechselwirkt.

5. Verfahren nach Anspruch 4, **dadurch gekennzeichnet, dass**
das Erlauben eines Zugriffs auf den Server (1) zur automatischen Registrierung und automatischen Erteilung digitaler Zertifikate ein Veranlassen des Webservers (2), dem Nutzer eine interaktive Schnittstelle zu präsentieren, enthält.

6. Verfahren nach Anspruch 5, **dadurch gekennzeichnet, dass**
die interaktive Schnittstelle geeignet ist, die Identifizierungsparameter des Nutzers zu empfangen.

7. Verfahren nach Anspruch 4, **dadurch gekennzeichnet, dass**
es weiterhin ein Aufzeichnen der Anforderung eines Zertifikats in einer Protokolldatei (6') des Webservers nach dem Senden der Nutzer-Identifikatoren und des einmaligen Passworts aufweist.

## Revendications

1. Procédé de distribution d'un certificat numérique à au moins un utilisateur, le au moins un utilisateur étant pourvu d'un terminal respectif (14) associé à un module respectif d'identité d'abonné (19), ce procédé comprenant les étapes suivantes :
i) ouverture de l'accès du au moins un utilisateur à un serveur (1) d'auto-abonnement et d'émission automatique de certificats numériques, l'accès étant associé à une demande de certificat pour l'utilisateur ;
ii) déclenchement, sur le terminal de l'utilisateur (14) de l'exécution d'un client (13) adapté pour activer une procédure d'authentification, un serveur d'authentification (11) jouant le rôle de passerelle avec un système GSM, le déclenchement étant provoqué par ledit serveur (1) d'auto-abonnement et d'émission automatique de certificats numériques, le client (13) provoquant l'extraction de données d'identification depuis ledit module d'identité d'abonné (19) et l'envoi desdites données d'identification audit serveur d'authentification (11) ;
iii) dans le cas d'une authentification réussie, obtention, sur le terminal de l'utilisateur (14), des paramètres d'authentification de l'utilisateur authentifié à partir dudit serveur d'authentification (11) ;
iv) création d'un mot de passe unique par combinaison des paramètres d'authentification et envoi dudit mot de passe unique avec les identificateurs de l'utilisateur depuis le terminal de l'utilisateur (14) au serveur (1) d'auto-abonnement et d'émission automatique de certificats numériques ;
v) demande par le serveur (1) d'auto-abonnement et d'émission automatique de certificats numériques au serveur d'authentification (11), vérification du mot de passe unique ;
vi) vérification, par une base de données appropriée (10) associée au serveur (1) d'auto-abonnement et d'émission automatique de certificats numériques, et sur la base desdits identificateurs d'utilisateur, de l'autorisation de l'utilisateur à demander le certificat ;
vii) dans le cas d'un résultat positif desdites vérifications, prise de contact avec un organisme de certification (8) pour la création d'un nouveau certificat pour l'utilisateur authentifié, réception en retour des paramètres associés audit certificat, et envoi des paramètres associés audit certificat à l'utilisateur, afin de permettre audit utilisateur d'obtenir le nouveau certificat dudit organisme de certification (8).

2. Procédé selon la revendication 1, **caractérisé en ce que** ladite étape v) est exécutée après la vérification de l'autorisation de l'utilisateur à demander le certificat.

3. Procédé selon la revendication 1, **caractérisé en ce que** lesdits identificateurs de l'utilisateur comprennent un nom, un prénom et un numéro de code personnel.

4. Procédé selon la revendication 1, **caractérisé en ce que** ledit accès au serveur (1) d'auto-abonnement et d'émission automatique de certificats numériques est géré par un serveur web (2) interagissant avec ledit serveur (1) d'auto-abonnement et d'émission automatique de certificats numériques.

5. Procédé selon la revendication 4, **caractérisé en ce que** ladite ouverture d'accès au serveur (1) d'auto-abonnement et d'émission automatique de certificats numériques comprend le fait d'amener ledit serveur web (2) à présenter à l'utilisateur une interface interactive.

6. Procédé selon la revendication 5, **caractérisé en ce que** ladite interface interactive est adaptée pour recevoir lesdits paramètres d'identification de l'utilisateur.

7. Procédé selon la revendication 4, **caractérisé en ce qu'**il comprend également l'enregistrement de ladite demande de certificat dans un fichier journal (6') dudit serveur web, après l'envoi des identificateurs de l'utilisateur et du mot de passe unique.
